# FASCICULE DE BREVET EUROPEEN

(11) **EP 3 623 979 B1**
(45) Date de publication et mention de la délivrance du brevet: **01.11.2023**
(21) Numéro de dépôt: 19196829.6
(22) Date de dépôt: 11.09.2019
(51) Int. Cl.: G06F 21/36, G06F 21/57, G06F 21/62, G06F 21/78, G06F 21/82, G06F 9/455

(54) **METHODE DE STOCKAGE SECURISE DANS UN RESEAU D'UNE IMAGE DE CONTENEUR DANS UN REGISTRE DE CONTENEURS**
GESICHERTE SPEICHERUNGSMETHODE IN EINEM NETZWERK EINES CONTAINER IMAGES IN EINER CONTAINER REGISTRY
METHOD FOR SECURE STORAGE IN A NETWORK OF AN IMAGE OF A CONTAINER IN A DIRECTORY OF CONTAINERS

(30) Priorité: 12.09.2018 FR 1858165
(43) Date de publication de la demande: 18.03.2020
(73) Titulaire: Bull SAS, 78340 Les Clayes-sous-Bois (FR)
(72) Inventeur: BOUAZIZ, M'hamed, 91300 MASSY (FR)
(74) Mandataire: Plasseraud IP

(56) Documents cités:
- EP-A2- 1 953 668
- US-A1- 2014 115 328
- US-A1- 2017 180 346

## Description

### DOMAINE DE L'INVENTION

L'invention concerne le domaine des méthodes de stockage sécurisé, dans un réseau, d'une image de conteneur dans un registre de conteneurs.

### CONTEXTE DE L'INVENTION

Selon un premier art antérieur, dans un réseau incluant un registre de conteneurs situé sur une machine serveur et offrant un service de stockage à une ou plusieurs machines client de ce réseau, le stockage peut être sécurisé en chiffrant, au niveau du registre de conteneurs, les images de conteneurs reçues par le registre de conteneurs, avant de les stocker effectivement dans le registre de conteneurs.

Cela protège bien le contenu des images de conteneurs stockées dans le registre de conteneurs contre une intrusion d'origine externe au registre de conteneurs. Cependant, cela ne protège pas bien le contenu des images de conteneurs stockées dans le registre de conteneurs contre une intrusion d'origine interne au registre de conteneurs, en particulier contre une intrusion malveillante de la part de l'administrateur de ce registre de conteneurs lui-même, problématique particulière contemplée par l'invention, ou bien même contre une maladresse de la part de l'administrateur de ce registre de conteneurs lui-même ayant finalement les mêmes effets.

Selon un deuxième art antérieur, une autre option consiste alors à ne stocker les images de conteneurs vraiment confidentielles qu'au niveau d'une machine client et sous forme chiffrée, mais alors les riches fonctionnalités offertes par le registre de conteneurs, à l'échelle d'une machine client ou encore plus à l'échelle de l'interaction entre plusieurs machines client distinctes entre elles, ne peuvent plus être utilisées. Les documents US 2014/115328 et US 2017/180346 sont aussi des documents pertinents.

Pour assurer la confidentialité des images de conteneurs stockées dans un registre de conteneurs, même vis-à-vis de l'administrateur du registre de conteneurs lui-même, et pour pouvoir ainsi bénéficier de la richesse des fonctionnalités offertes par ce registre de conteneurs, l'invention est alors confrontée au dilemme suivant :
> soit le chiffrement est réalisé au niveau de la machine serveur, et dans ce cas la confidentialité des images de conteneurs stockées dans le registre de conteneurs n'est pas assurée vis-à-vis de l'administrateur du registre de conteneurs, ou d'une autre attaque malveillante réalisée au niveau d'un élément de gestion interne de ce registre conteneurs,
> soit le chiffrement est réalisé au niveau de la machine client, et dans ce cas :
   o soit l'opération de déchiffrement au niveau de la machine client, ou d'un noeud de calcul utilisé par la machine client, peut devenir malaisée si la clé de déchiffrement n'y est pas stockée,
   ∘ soit la confidentialité n'est à nouveau plus assurée vis-à-vis des administrateurs des différents noeuds de calcul sur lesquels, au cours du temps, la machine client peut être installée, ne restant pas forcément toujours sur son noeud d'entrée dans le réseau, si la clé de déchiffrement vient à être stockée, éventuellement avec son mot de passe, sur le noeud de calcul où la machine client se trouve être installée lorsqu'elle veut télécharger une image de conteneur à partir du registre de conteneurs, pour exécuter le conteneur correspondant à cette image de conteneur, sur ce noeud de calcul.

### RESUME DE L'INVENTION

L'invention est définie dans les revendications indépendantes 1, 8 et 15.

Le but de la présente invention est de fournir une méthode de stockage sécurisé, dans un réseau, d'une image de conteneur, dans un registre de conteneurs, palliant au moins partiellement les inconvénients précités.

Plus particulièrement, l'invention vise à fournir alors un chiffrement de l'image de conteneur, au niveau de la machine client, à demande, avant l'envoi vers le registre de conteneurs de la machine serveur, et/ou un déchiffrement de l'image de conteneur ensuite téléchargée chiffrée, à réception du téléchargement, par l'envoi ponctuel de la clé de déchiffrement utilisable pour le déchiffrement de ce seul téléchargement et dans des conditions sécurisées.

Pour cela, l'invention propose que :
> la clé de chiffrement de cette image de conteneur soit utilisable dans la mémoire vive de la machine client, inaccessible sur la mémoire de masse de la machine client et inaccessible sur la machine serveur,
> et/ou la clé de déchiffrement de cette image de conteneur soit utilisable dans la mémoire vive de la machine client, inaccessible sur la mémoire de masse de la machine client et inaccessible sur la machine serveur.

A cette fin, la présente invention propose une méthode de stockage sécurisé, dans un réseau, d'une image de conteneur dans un registre de conteneurs, comprenant : une étape d'envoi d'une image de conteneur, cette image de conteneur correspondant à un état initial d'un environnement de machine client à partir duquel ce conteneur peut ensuite être exécuté, à partir d'une machine client du réseau vers un registre de conteneurs d'une machine serveur du réseau distante de la machine client, caractérisée en ce que la méthode de stockage comprend aussi : une étape de chiffrement de cette image de conteneur, réalisée dans la mémoire vive de la machine client, avant l'étape d'envoi vers la machine serveur, de sorte que ladite image de conteneur est déjà chiffrée lorsqu'elle est reçue par le registre de conteneurs pour y être stockée, et en ce que : la clé de chiffrement de cette image de conteneur est utilisable dans la mémoire vive de la machine client, inaccessible sur la mémoire de masse de la machine client et inaccessible sur la machine serveur.

A cette fin, la présente invention propose également une méthode de déstockage sécurisé, dans un réseau, d'une image de conteneur stockée dans un registre de conteneurs, comprenant : une étape de téléchargement, sur une machine client du réseau, d'une image de conteneur, cette image de conteneur correspondant à un état initial d'un environnement de machine client à partir duquel ce conteneur peut ensuite être exécuté, stockée sous forme chiffrée dans un registre de containers d'une machine serveur du réseau distante de la machine client, caractérisée en ce que la méthode de déstockage comprend aussi : une étape de déchiffrement de cette image de conteneur, réalisée dans la mémoire vive de la machine client, après l'étape de téléchargement en provenance de la machine serveur, de sorte que l'image de conteneur est encore chiffrée lorsqu'elle est reçue par la machine client, et en ce que : la clé de déchiffrement de cette image de conteneur est utilisable dans la mémoire vive de la machine client, inaccessible sur la mémoire de masse de la machine client et inaccessible sur la machine serveur.

A cette fin, la présente invention propose encore un réseau de noeuds, comprenant un registre de conteneurs, utilisant une méthode de stockage sécurisé selon l'invention et une méthode de déstockage sécurisé selon l'invention.

Suivant des modes de réalisation préférés, l'invention comprend une ou plusieurs des caractéristiques suivantes qui peuvent être utilisées séparément ou en combinaison partielle entre elles ou en combinaison totale entre elles, avec l'un ou l'autre des objets précités de l'invention.

De préférence, l'étape d'envoi est réalisée sur un noeud d'entrée de la machine client du réseau, l'étape de chiffrement est réalisée sur le noeud d'entrée, l'exécution du conteneur sera réalisée sur un noeud de calcul de la machine client du réseau, le noeud de calcul est distinct du noeud d'entrée.

De préférence, l'étape de téléchargement est réalisée sur un noeud de calcul de la machine client du réseau, l'étape de déchiffrement est réalisée sur le noeud de calcul, l'exécution du conteneur à partir de l'image de conteneur déchiffrée est réalisée sur le noeud de calcul, la clé de déchiffrement est envoyée d'un noeud d'entrée de la machine client du réseau au noeud de calcul, le noeud de calcul est distinct du noeud d'entrée, la clé de déchiffrement est utilisable une seule fois dans la mémoire vive du noeud de calcul pour réaliser le déchiffrement de l'image de conteneur à déchiffrer pour lancer ensuite l'exécution du conteneur, mais reste inaccessible sur la mémoire de masse du noeud de calcul.

Ainsi, le fait que l'étape d'envoi de l'image de conteneur soit réalisée sur un noeud d'entrée distinct du noeud de calcul sur lequel le conteneur va ensuite s'exécuter, rend plus délicats et plus complexes les opérations de chiffrement et/ou de déchiffrement des images de conteneur, rendant alors d'autant plus intéressantes les méthodes de stockage et/ou de déstockage sécurisés des images de conteneurs dans un registre de conteneurs proposées par l'invention.

De préférence, la clé de chiffrement est introduite codée sur la machine client, la clé de chiffrement est accompagnée d'un mot de passe de décodage permettant de la décoder, la clé de chiffrement codée et le mot de passe de décodage ne se retrouvent ensemble que dans la mémoire vive de la machine client pour chiffrer l'image de conteneur.

De préférence, la clé de déchiffrement est introduite codée sur la machine client, la clé de déchiffrement est accompagnée d'un mot de passe de décodage permettant de la décoder, la clé de déchiffrement codée et le mot de passe de décodage ne se retrouvent ensemble que dans la mémoire vive de la machine client pour déchiffrer l'image de conteneur chiffrée.

De préférence, la clé de déchiffrement est introduite codée sur le noeud d'entrée, la clé de déchiffrement est accompagnée d'un mot de passe de décodage permettant de la décoder, la clé de déchiffrement codée et le mot de passe de décodage sont envoyés séparément du noeud d'entrée vers le noeud de calcul et ne se retrouvent ensemble que dans la mémoire vive du noeud de calcul pour déchiffrer l'image de conteneur chiffrée.

Ainsi, la décomposition de la clé de chiffrement et/ou de déchiffrement en deux parties, à savoir clé elle-même mais sous forme codée et mot de passe de décodage associé, va améliorer la confidentialité des images de conteneurs stockées dans le registre de conteneurs, en rendant bien plus difficile tout piratage de ces images de conteneurs stockées chiffrées dans le registre de conteneurs, même de la part des administrateurs du réseau, notamment de la part de l'administrateur du registre de conteneurs et de la part des administrateurs des noeuds de calcul sur lesquelles les machines client peuvent être installées au cours du temps.

De préférence, l'étape de chiffrement est d'abord précédée par une étape de réalisation d'une image de conteneur sur la machine client, éventuellement sur le noeud d'entrée.

Ainsi, puisque l'opération de chiffrement de l'image de conteneur n'est pas forcément réalisée sur la même machine physique ou sur la même machine virtuelle que l'opération d'exécution du conteneur correspondant, la méthode de stockage sécurisé selon l'invention est rendue d'autant plus intéressante.

De préférence, la clé de chiffrement est une clé symétrique.

De préférence, la clé de déchiffrement est une clé symétrique.

Ainsi, la clé de chiffrement et la clé de déchiffrement sont identiques, les opérations de chiffrement et/ou de déchiffrement sont alors rendues plus rapides et plus simples, ce qui est particulièrement intéressant ici, compte tenu de la circulation des images de conteneurs, des clés de chiffrement et/ou de déchiffrement, ainsi que de leurs éventuels mots de passe de décodage associés, entre le registre de conteneurs, le noeud d'entrée et éventuellement différents noeuds de calcul.

De préférence, l'étape de chiffrement de l'image de conteneur est réalisée juste avant l'étape d'envoi de cette image de conteneur, entre la requête d'envoi de l'image de conteneur effectuée par l'utilisateur de la machine client et l'envoi effectif de l'image de conteneur chiffrée vers la machine serveur.

Ainsi, l'opération de chiffrement n'est réalisée qu'au dernier moment, lorsqu'elle est encore vraiment utile, de manière à éviter des opérations de chiffrement inutiles parce-que non suivies d'envois effectifs vers le registre de conteneurs, mais suffisamment à temps pour assurer pleinement la confidentialité recherchée.

De préférence, l'étape de chiffrement de l'image de conteneur est intégrée dans une ligne de commande d'envoi, de la machine client vers la machine serveur, de cette image de conteneur, sous la forme d'une couche supplémentaire de chiffrement.

De préférence, la clé de chiffrement est passée sous la forme d'un argument de cette ligne de commande d'envoi.

De préférence, l'étape de déchiffrement de l'image de conteneur est intégrée dans une ligne de commande de téléchargement, de la machine client vers la machine serveur, de cette image de conteneur, sous la forme d'une couche supplémentaire de déchiffrement.

De préférence, la clé de déchiffrement est passée sous la forme d'un argument de cette ligne de commande de téléchargement.

Ainsi, le timing de l'opération de chiffrement et/ou de l'opération de déchiffrement est optimisé, tandis que leur mise en oeuvre est à la fois simplifiée et mieux automatisée.

De préférence, l'étape de chiffrement est réalisée automatiquement avant tout envoi d'image de conteneur, de la machine client vers la machine serveur.

Ainsi, l'automatisation est alors complète.

De préférence, l'étape de chiffrement est réalisée, après consultation automatique de l'utilisateur de la machine client suivie d'une acceptation de chiffrement par l'utilisateur de la machine client.

Ainsi, seules les images de conteneurs vraiment confidentielles vont devoir être chiffrées avant d'être envoyées vers le registre de conteneurs.

De préférence, le registre de conteneurs comprend au moins : une fonction d'ajout d'une image de conteneur au registre, une fonction de suppression d'une image de conteneur du registre, une fonction de partage d'une image de conteneur stockée dans le registre, entre plusieurs machines clients du réseau distinctes entre elles, une fonction de téléchargement d'une image de conteneur stockée dans le registre, vers une machine client du réseau.

Ainsi, un bon compromis est réalisé entre d'une part la grande richesse de fonctionnalités offertes par un registre de conteneurs et d'autre part le niveau de confidentialité requis lequel peut être très élevé pour certaines images de conteneurs, en particulier vis-à-vis d'acteurs du réseau qui sont à priori considérés habituellement comme au-dessus de tout soupçon.

D'autres caractéristiques et avantages de l'invention apparaîtront à la lecture de la description qui suit d'un mode de réalisation préféré de l'invention, donnée à titre d'exemple et en référence aux dessins annexés.

### BREVE DESCRIPTION DES DESSINS

La figure 1 représente schématiquement un exemple de mise en évidence du problème de sécurité selon un mode de réalisation de l'art antérieur.
La figure 2 représente schématiquement un exemple de mise en évidence d'une solution au problème de sécurité selon un mode de réalisation de l'invention.
La figure 3 représente schématiquement un exemple d'implémentation de la méthode de stockage sécurisé et de la méthode de déstockage sécurisé dans un réseau, selon un mode de réalisation de l'invention.

### DESCRIPTION DETAILLEE DE L'INVENTION

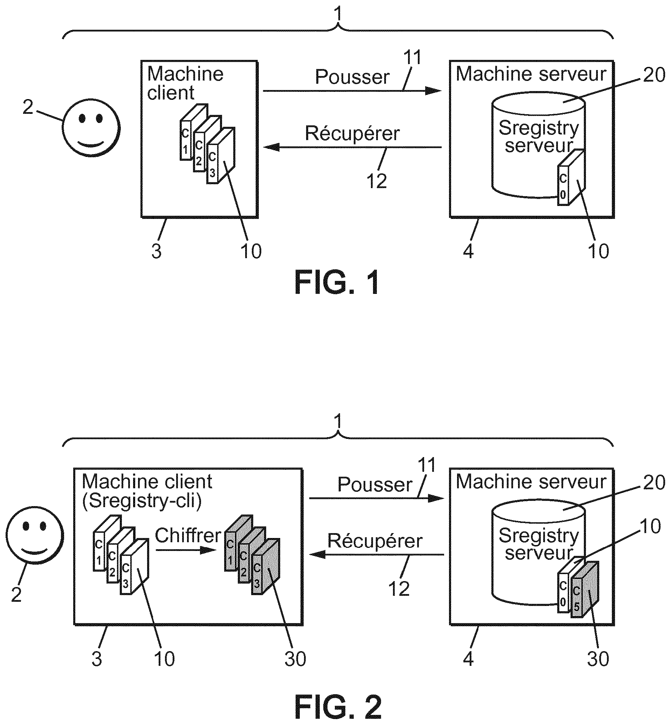

La figure 1 représente schématiquement un exemple de mise en évidence du problème de sécurité selon un mode de réalisation de l'art antérieur.

Dans un réseau 1, de type cluster haute performance (HPC pour « high Performance Cluster » en langue anglaise), un utilisateur 2 réalise sur une machine client 3, stocke ou pousse 11 vers le registre 20 de conteneurs d'une machine serveur 4, déstocke ou récupère 12 auprès du registre 20 de conteneurs de la machine serveur 4, et utilise en exécutant sur la machine client 3 les conteneurs correspondant, une ou plusieurs images 10 de conteneurs. Une image 10 de conteneur correspond à un état initial d'un environnement de machine client 3 à partir duquel ce conteneur peut ensuite être exécuté. Des exemples de telles images 10 de conteneurs sont : C0, C1, C2, C3.

L'utilisateur 2 envoie au registre 20 de conteneurs ses images 10 de conteneurs non chiffrées, donc en clair. La machine serveur 4 reçoit ces images 10 de conteneurs, les stocke dans le registre 20 de conteneurs, peut éventuellement les chiffrer, mais comme cette machine serveur 4 a reçu les images 10 de conteneurs non chiffrées, son administrateur, s'il est malveillant ou maladroit, peut pirater ou laisser pirater, ces images 10 de conteneurs, dont certaines peuvent être confidentielles, voire hautement confidentielles.

Prenons par exemple un registre 20 de conteneurs de type « Singularity » (« Singularity » = marque déposée) qui existe en logiciel libre (« open source » en langue anglaise). Ce registre 20 de conteneurs est un registre central d'images 10 de conteneurs qui permet de gérer, d'ajouter, de supprimer, ou de partager ces images 10 de conteneurs entre plusieurs utilisateurs, et notamment avec des utilisateurs différents de l'utilisateur 2 qui est à l'origine de ces images 10 de conteneurs.

La figure 2 représente schématiquement un exemple de mise en évidence d'une solution au problème de sécurité selon un mode de réalisation de l'invention.

Dans un réseau 1, de type cluster haute performance, un utilisateur 2 réalise sur une machine client 3, stocke ou pousse 11 vers le registre 20 de conteneurs d'une machine serveur 4, déstocke ou récupère 12 auprès du registre 20 de conteneurs de la machine serveur 4, et utilise en exécutant sur la machine client 3 les conteneurs correspondant, une ou plusieurs images 10 de conteneurs. Une image 10 de conteneur correspond à un état initial d'un environnement de machine client 3 à partir duquel ce conteneur peut ensuite être exécuté. Des exemples de telles images 10 de conteneurs sont : C0, C1, C2, C3, C5.

Un registre 20 de conteneurs est une librairie d'images de conteneurs qui y sont indexées, permettant de les classer et de les retrouver, c'est-à-dire que le registre 20 de conteneurs peut être considéré comme une base de données d'images de conteneurs. Un registre de conteneurs peut aussi être considéré comme offrant un service de stockage et de distribution d'images de conteneurs, permettant aux utilisateurs de pousser leurs images de conteneurs dans une machine serveur centrale, et de les partager avec d'autres utilisateurs tout en pouvant les récupérer pour modification ou exécution des conteneurs correspondant à ces images de conteneurs stockées dans ce registre de conteneurs.

L'utilisateur 2 envoie au registre 20 de conteneurs ses images 30 de conteneurs chiffrées, donc illisibles sans être préalablement déchiffrées. La machine serveur 4 reçoit ces images 30 de conteneurs, les stocke dans le registre 20 de conteneurs, mais ne peut pas les déchiffrer, car la machine serveur 4 a reçu les images 30 de conteneurs chiffrées et elle ne possède pas la clé de déchiffrement correspondante. Par conséquent, son administrateur, même s'il est malveillant ou maladroit, ne peut ni pirater ou ni laisser pirater, ces images 30 chiffrées de conteneurs, dont la confidentialité reste donc garantie, même à l'égard de l'administrateur du registre 20 de conteneurs. En revanche, la confidentialité de l'image 10 de conteneur, en l'occurrence C0, qui a été stockée non chiffrée, dans le registre 20 de conteneurs, n'est pas garantie.

Pour ajouter le mécanisme de chiffrement des images 10 de conteneurs les transformant en images 30 chiffrées de conteneurs, on peut implémenter une procédure de chiffrement dans une ligne de commande d'un script, ce qui permettra de chiffrer l'image 10 de conteneur avant d'envoyer une image chiffrée 30 de conteneur à la machine serveur 4. Ainsi, l'utilisateur 2, s'il souhaite chiffrer son image 10 de conteneur, donne en entrée de cette ligne de commande sa clé symétrique pour cette image 10 de conteneur laquelle sera transformée en une image 30 chiffrée de conteneur au niveau de la machine client 3 avant d'être poussée vers le registre 20 de conteneurs de la machine serveur 4. Lorsque l'utilisateur 2 souhaite réutiliser cette image 30 de conteneur, il peut la récupérer, sur la machine client 3, auprès du registre 20 de conteneurs de la machine serveur 4 distante de la machine client 3, et utiliser sa clé de déchiffrement (identique à la clé de chiffrement s'il s'agit d'une clé symétrique) pour déchiffrer l'image 30 de conteneur afin de réobtenir l'image 10 de conteneur à partir de laquelle le conteneur correspondant va pouvoir être exécuté sur la machine client 3.

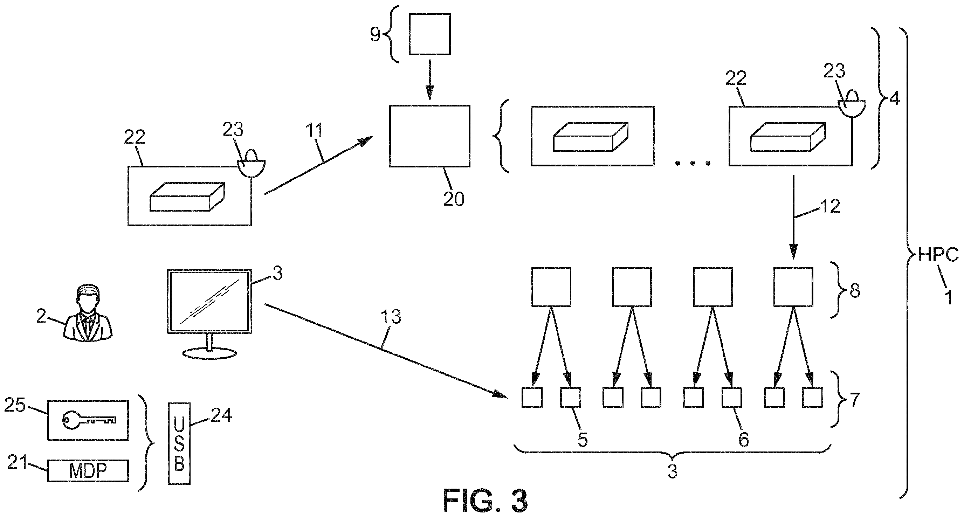

La figure 3 représente schématiquement un exemple d'implémentation de la méthode de stockage sécurisé et de la méthode de déstockage sécurisé dans un réseau, selon un mode de réalisation de l'invention.

Dans un réseau 1 de type cluster haute performance comprenant un grand nombre de noeuds de calcul 7 regroupés en groupes de noeuds respectivement gérés par des administrateurs 8 de noeuds de calcul 7, se trouve un registre 20 de conteneurs hébergé par une machine serveur 4 appartenant aussi au réseau 1. Cette machine serveur 4, et le registre 20 de conteneurs qu'elle héberge, sont gérés par un administrateur 9. Le réseau 1 comprend encore une machine client 3 d'un utilisateur 2 ; en fait une machine client 3 pour chaque utilisateur 2, car il y a plusieurs utilisateurs, et il y a même un grand nombre d'utilisateurs dans ce réseau 1 de type cluster haute performance.

L'utilisateur 2 travaille sur la machine client 3 qui est son noeud d'entrée dans le réseau, mais il peut ensuite changer de noeud de calcul pour travailler sur l'un ou l'autre des noeuds de calcul 7, par exemple le noeud 5 ou le noeud 6. Par exemple, l'utilisateur 2 réalise sur sa machine client 3 servant de noeud d'entrée un container dont l'image 22 de conteneur est chiffrée avec une clé 25 symétrique de chiffrement, donc identique à la clé 25 de déchiffrement. Ce chiffrement est symbolisé par la petite clé 23 attachée à l'image 22 de conteneur. L'utilisateur 2 ne stocke pas sa clé 25 symétrique de chiffrement dans sa machine client 3, mais sur un périphérique 24, par exemple une clé USB 24 qui reste sous le contrôle de l'utilisateur 2. La clé 25 symétrique de chiffrement est stockée elle-même sous une forme codée avec un mot de passe 21 sur cette clé USB 24.

L'utilisateur 2 après avoir chiffré, sur sa machine client 3, l'image de conteneur qui est donc une image 22 de conteneur chiffrée, la pousse donc chiffrée par un envoi 11 vers le registre 20 de conteneurs de la machine serveur 4 qui la stocke. L'image 22 de conteneur stockée étant chiffrée d'une part et l'administrateur 9 ne possédant pas la clé 25 symétrique de chiffrement, cet administrateur 9 ne peut ni pirater ni laisser pirater cette image 22 de conteneur éventuellement confidentielle. Lors du chiffrement, la clé 25 symétrique de chiffrement ne se retrouve jamais sur la mémoire de masse de la machine client 3, et ne se retrouve décodée par le mot de passe 21 que temporairement dans la mémoire vive de la machine client 3 juste le temps de réaliser le chiffrement de l'image 22 de conteneur, ce qui rend le piratage de cette clé 25 symétrique de chiffrement, sinon impossible, du moins très difficile, et en tous cas beaucoup plus difficile que pour les méthodes de chiffrement selon l'art antérieur.

L'utilisateur 2 se trouve maintenant sur le noeud de calcul 5, différent de son noeud d'entrée. Il veut récupérer son image 22 de conteneur, soit pour la modifier soit pour exécuter le conteneur correspondant sur le noeud de calcul 5. L'utilisateur 2 rappelle, du registre 20 de conteneurs, depuis la machine serveur 4 distante, son image 22 de conteneurs qui lui est renvoyée sur le noeud de calcul 5. L'utilisateur 2 transmet de sa machine client 3, grâce à sa clé USB 24, séparément d'une part la clé 25 symétrique de déchiffrement mais sous forme codée et d'autre part le mot de passe 21 permettant de décoder la clé 25 symétrique de déchiffrement. La clé 25 symétrique de déchiffrement n'est décodée par le mot de passe 21 que dans la mémoire vive du noeud de calcul 5 et n'y reste que temporairement juste le temps de déchiffrer l'image 22 du conteneur laquelle, une fois déchiffrée, peut être librement utilisée par l'utilisateur 2 au niveau du noeud de calcul 5. La clé 25 symétrique de déchiffrement ne se trouvant jamais dans la mémoire de masse du noeud de calcul 5, et en tous cas pas sous forme décodée, et le mot de passe 21 non plus, il devient très difficile, pour l'administrateur 8 du noeud de calcul 5, même malveillant ou maladroit, de pirater ou de laisser pirater, cette clé 25 symétrique de déchiffrement. Par conséquent, toutes les images 22 de conteneurs chiffrées avec cette clé 25 symétrique de déchiffrement, resteront sécurisées et leur caractère confidentiel sera respecté. Là encore, le piratage, au niveau du noeud de calcul 5, de cette clé 25 symétrique de déchiffrement, est rendu sinon impossible, du moins très difficile, et tous cas beaucoup plus difficile que pour les méthodes de déchiffrement selon l'art antérieur.

Un autre utilisateur que l'utilisateur 2, avec qui l'utilisateur 2 veut bien partager son image 22 de conteneur, se trouve maintenant sur le noeud de calcul 6, différent du noeud d'entrée de l'utilisateur 2 comme du précédent noeud de calcul 5. Cet autre utilisateur, travaillant sur le noeud de calcul 6, souhaiterait récupérer l'image 22 de conteneur de l'utilisateur 2 lequel est d'accord. Cet autre utilisateur souhaite par exemple, soit modifier cette image 22 de conteneur, soit exécuter le conteneur correspondant à cette image 22 de conteneur, sur le noeud de calcul 6 où il travaille. Cet autre utilisateur rappelle du registre 20 de conteneurs depuis la machine serveur 4 distante, cette image 22 de conteneurs qui lui est renvoyée sur le noeud de calcul 6. L'utilisateur 2 lui transmet de sa machine client 3, grâce à sa clé USB 24, séparément d'une part la clé 25 symétrique de déchiffrement mais sous forme codée et d'autre part le mot de passe 21 permettant de décoder la clé 25 symétrique de déchiffrement. La clé 25 symétrique de déchiffrement n'est décodée par le mot de passe 21 que dans la mémoire vive du noeud de calcul 6 et n'y reste que temporairement juste de temps de déchiffrer l'image 22 du conteneur laquelle, une fois déchiffrée, peut être librement utilisée par cet autre utilisateur au niveau du noeud de calcul 6. La clé 25 symétrique de déchiffrement ne se trouvant jamais dans la mémoire de masse du noeud de calcul 6, et en tous cas pas sous forme décodée, et le mot de passe 21 non plus, il devient très difficile, pour l'administrateur 8 du noeud de calcul 6, même malveillant ou maladroit, de pirater ou de laisser pirater, cette clé 25 symétrique de déchiffrement. Par conséquent, toutes les images 22 de conteneurs chiffrées avec cette clé 25 symétrique de déchiffrement, resteront sécurisées et leur caractère confidentiel sera respecté. Là encore, le piratage, au niveau du noeud de calcul 6, de cette clé 25 symétrique de déchiffrement, est rendu sinon impossible, du moins très difficile, et tous cas beaucoup plus difficile que pour les méthodes de déchiffrement selon l'art antérieur.

Ici, cet autre utilisateur doit demander l'autorisation de l'utilisateur 2 qui lui envoie séparément la clé 25 symétrique de chiffrement sous forme codée et le mot de passe 21 pour la décoder, la clé 25 symétrique de chiffrement et le mot de passe 21 ne se retrouvant que dans la mémoire vive du noeud de calcul 6, et seulement temporairement le temps de déchiffrer cette image 22 de conteneur. Alternativement, cet autre utilisateur peut aussi posséder la clé 25 symétrique de chiffrement, auquel cas il pourra déchiffrer toutes les images 22 de conteneurs de l'utilisateur 2 même sans lui demander l'autorisation. Dans ce dernier cas, toutefois, l'utilisateur 2 accepte de donner à cet autre utilisateur un accès illimité à toutes ses images 22 de conteneurs, tandis que dans le premier cas, il pouvait filtrer cet accès, c'est-à-dire l'autoriser ou le refuser, image 22 de conteneur par image 22 de conteneur.

Bien entendu, la présente invention n'est pas limitée aux exemples et au mode de réalisation décrits et représentés, mais elle est susceptible de nombreuses variantes accessibles à l'homme de l'art.

## Revendications

1. Méthode de stockage sécurisé, dans un réseau (1), d'une image (22) de conteneur dans un registre (20) de conteneurs, comprenant :
> une étape d'envoi (11) d'une image (22) de conteneur, cette image (22) de conteneur correspondant à un état initial d'un environnement de machine client à partir duquel ce conteneur peut ensuite être exécuté, à partir d'une première machine client (3) du réseau (1) vers un registre (20) de conteneurs d'une machine serveur (4) du réseau (1) distante de la première machine client (3),
> une étape de chiffrement (23) de cette image (20) de conteneur, réalisée dans la mémoire vive de la première machine client (3), avant l'étape d'envoi (1) vers la machine serveur (4), de sorte que ladite image (22) de conteneur est déjà chiffrée lorsqu'elle est reçue par le registre (20) de conteneurs pour y être stockée,
**caractérisée en ce que** :
> la clé de chiffrement (25) est introduite codée sur la première machine client (3), la clé de chiffrement (25) est accompagnée d'un mot de passe (21) de décodage permettant de la décoder, la clé de chiffrement (25) codée et le mot de passe (21) de décodage ne se retrouvent ensemble que dans la mémoire vive de la première machine client (3) pour chiffrer l'image (22) de conteneur, de sorte que la clé de chiffrement (25) de cette image (22) de conteneur est utilisable dans la mémoire vive de la première machine client (3), inaccessible sur la mémoire de masse de la première machine client (3) et inaccessible sur la machine serveur (4).

2. Méthode de stockage sécurisé selon la revendication 1, **caractérisé en ce que** :
> l'étape d'envoi (11) est réalisée sur un noeud d'entrée de la première machine client (3) du réseau (1),
> l'étape de chiffrement (23) est réalisée sur le noeud d'entrée,
> l'exécution du conteneur sera réalisée sur un noeud de calcul (5, 6) de la première machine client (3) du réseau (1),
> le noeud de calcul (5, 6) est distinct du noeud d'entrée.

3. Méthode de stockage sécurisé selon l'une quelconque des revendications précédentes, **caractérisé en ce que** l'étape de chiffrement (23) est d'abord précédée par une étape de réalisation d'une image (22) de conteneur sur la première machine client (3), éventuellement sur le noeud d'entrée.

4. Méthode de stockage sécurisé selon l'une quelconque des revendications précédentes, **caractérisé en ce que** la clé de chiffrement (25) est une clé symétrique.

5. Méthode de stockage sécurisé selon l'une quelconque des revendications précédentes, **caractérisé en ce que** l'étape de chiffrement (23) de l'image (22) de conteneur est réalisée juste avant l'étape d'envoi (11) de cette image (22) de conteneur, entre la requête d'envoi de l'image (22) de conteneur effectuée par l'utilisateur (2) de la première machine client (3) et l'envoi effectif (11) de l'image (22) de conteneur chiffrée vers la machine serveur (4).

6. Méthode de stockage sécurisé selon l'une quelconque des revendications précédentes, **caractérisée en ce que** l'étape de chiffrement (23) de l'image (22) de conteneur est intégrée dans une ligne de commande d'envoi, de la première machine client (3) vers la machine serveur (4), de cette image (22) de conteneur, sous la forme d'une couche supplémentaire de chiffrement,
et avantageusement **en ce que** la clé de chiffrement (25) est passée sous la forme d'un argument de cette ligne de commande d'envoi.

7. Méthode de stockage sécurisé selon la revendication 6, **caractérisée en ce que** l'étape de chiffrement (23) est réalisée automatiquement avant tout envoi d'image (22) de conteneur, de la première machine client (3) vers la machine serveur (4),
ou **en ce que** l'étape de chiffrement (23) est réalisée, après consultation automatique de l'utilisateur (2) de la première machine client (3) suivie d'une acceptation de chiffrement par l'utilisateur (2) de la première machine client (3).

8. Méthode de déstockage sécurisé, dans un réseau (1), d'une image (22) de conteneur stockée dans un registre (20) de conteneurs, comprenant :
> une étape de téléchargement (12), sur une deuxième machine client (3) du réseau (1), d'une image (22) de conteneur, cette image (22) de conteneur correspondant à un état initial d'un environnement d'une première machine client à partir duquel ce conteneur peut ensuite être exécuté, stockée sous forme chiffrée dans un registre (20) de containers d'une machine serveur (4) du réseau (1) distante de la deuxième machine client (3),
> une étape de déchiffrement de cette image (22) de conteneur, réalisée dans la mémoire vive de la deuxième machine client (3), après l'étape de téléchargement (12) en provenance de la machine serveur (4), de sorte que l'image (22) de conteneur est encore chiffrée lorsqu'elle est reçue par la deuxième machine client (3),
**caractérisée en ce que** :
> la clé de déchiffrement (25) est introduite codée sur la deuxième machine client (3), la clé de déchiffrement (25) est accompagnée d'un mot de passe (21) de décodage permettant de la décoder, la clé de déchiffrement (25) codée et le mot de passe (21) de décodage ne se retrouvent ensemble que dans la mémoire vive de la deuxième machine client (3) pour déchiffrer l'image (22) de conteneur chiffrée, de sorte que la clé de déchiffrement (25) de cette image (22) de conteneur est utilisable dans la mémoire vive de la deuxième machine client (3), inaccessible sur la mémoire de masse de la deuxième machine client (3) et inaccessible sur la machine serveur (4).

9. Méthode de déstockage sécurisé selon la revendication 8, **caractérisé en ce que** :
➢ l'étape de téléchargement (12) est réalisée sur un noeud de calcul (5, 6) de la deuxième machine client (3) du réseau (1),
➢ l'étape de déchiffrement est réalisée sur le noeud de calcul (5, 6),
➢ l'exécution du conteneur à partir de l'image (22) de conteneur déchiffrée est réalisée sur le noeud de calcul (5, 6),
➢ la clé de déchiffrement (25) est envoyée d'un noeud d'entrée de la première machine client (3) du réseau (1) au noeud de calcul (5, 6),
➢ le noeud de calcul (5, 6) est distinct du noeud d'entrée,
➢ la clé de déchiffrement (25) est utilisable une seule fois dans la mémoire vive du noeud de calcul (5, 6) pour réaliser le déchiffrement de l'image (22) de conteneur à déchiffrer pour lancer ensuite l'exécution du conteneur, mais reste inaccessible sur la mémoire de masse du noeud de calcul (5, 6).

10. Méthode de déstockage sécurisé selon la revendication 8 et selon la revendication 9, **caractérisé en ce que** :
> la clé de déchiffrement (25) est introduite codée sur le noeud d'entrée,
> la clé de déchiffrement (25) est accompagnée d'un mot de passe (21) de décodage permettant de la décoder,
> la clé de déchiffrement (25) codée et le mot de passe (21) de décodage sont envoyés séparément du noeud d'entrée vers le noeud de calcul (5, 6) et ne se retrouvent ensemble que dans la mémoire vive du noeud de calcul (5, 6) pour déchiffrer l'image (22) de conteneur chiffrée.

11. Méthode de déstockage sécurisé selon l'une quelconque des revendications 8 à 10, **caractérisé en ce que** la clé de déchiffrement (25) est une clé symétrique.

12. Méthode de déstockage sécurisé selon l'une quelconque des revendications 8 à 11, **caractérisée en ce que** l'étape de déchiffrement de l'image (22) de conteneur est intégrée dans une ligne de commande de téléchargement, de la deuxième machine client (3) vers la machine serveur (4), de cette image (22) de conteneur, sous la forme d'une couche supplémentaire de déchiffrement.
et avantageusement **en ce que** la clé de déchiffrement (25) est passée sous la forme d'un argument de cette ligne de commande de téléchargement.

13. Méthode de stockage sécurisé selon l'une quelconque des revendications 1 à 7, **caractérisé en ce que** :
➢ le registre (20) de conteneurs comprend au moins :
∘ une fonction d'ajout d'une image (22) de conteneur au registre (20),
∘ une fonction de suppression d'une image (22) de conteneur du registre (20),
∘ une fonction de partage d'une image (22) de conteneur stockée dans le registre (20), entre plusieurs machines clients (3) du réseau (1) distinctes entre elles,
∘ une fonction de téléchargement (12) d'une image (22) de conteneur stockée dans le registre (20), vers une machine client (3) du réseau (1).

14. Méthode de déstockage sécurisé selon l'une quelconque des revendications 8 à 13, **caractérisé en ce que** :
➢ le registre (20) de conteneurs comprend au moins :
∘ une fonction d'ajout d'une image (22) de conteneur au registre (20),
∘ une fonction de suppression d'une image (22) de conteneur du registre (20),
∘ une fonction de partage d'une image (22) de conteneur stockée dans le registre (20), entre plusieurs machines clients (3) du réseau (1) distinctes entre elles,
∘ une fonction de téléchargement (12) d'une image (22) de conteneur stockée dans le registre (20), vers une machine client (3) du réseau (1).

15. Réseau de noeuds, comprenant un registre (20) de conteneurs, une première machine client, une deuxième machine client, utilisant une méthode de stockage sécurisé selon l'une quelconque des revendications 1 à 7 et 13 et une méthode de déstockage sécurisé selon l'une quelconque des revendications 8 à 12 et 14.

## Patentansprüche

1. Verfahren zur sicheren Speicherung, in einem Netzwerk (1), eines Container-Images (22) in einem Containerregister (20), umfassend:
> einen Schritt des Sendens (11) eines Container-Images (22), wobei dieses Container-Image (22) einem Anfangszustand einer Umgebung eines Client-Rechners entspricht, von der aus dieser Container anschließend ausgeführt werden kann, von einem ersten Client-Rechner (3) des Netzes (1) zu einem Containerregister (20) eines Server-Rechners (4) des Netzes (1), der von dem ersten Client-Rechner (3) entfernt ist,
> einen Schritt des Verschlüsselns (23) dieses Container-Images (20), der im RAM des ersten Client-Rechners (3) vor dem Schritt des Sendens (1) an den Server-Rechner (4) durchgeführt wird, so dass das Container-Image (22) bereits verschlüsselt ist, wenn es von dem Containerregister (20) empfangen wird, um dort gespeichert zu werden,
**dadurch gekennzeichnet, dass**:
> der Verschlüsselungsschlüssel (25) verschlüsselt auf dem ersten Client-Rechner (3) eingegeben wird, der Verschlüsselungsschlüssel (25) von einem Decodierungspasswort (21) begleitet wird, mit dem er decodiert werden kann, wobei sich der verschlüsselte Verschlüsselungsschlüssel (25) und das Decodierungspasswort (21) nur im RAM des ersten Client-Rechners (3) gemeinsam befinden, um das Container-Image (22) zu verschlüsseln, so dass der Verschlüsselungsschlüssel (25) dieses Container-Images (22) im RAM der ersten Client-Rechner (3) verwendbar, im Massenspeicher des ersten Client-Rechners (3) unzugänglich und auf dem Server-Rechner (4) unzugänglich ist.

2. Verfahren zur sicheren Speicherung nach Anspruch 1, **dadurch gekennzeichnet, dass**:
> der Sendeschritt (11) an einem Eingangsknoten des ersten Client-Rechners (3) des Netzwerks (1) durchgeführt wird,
> der Schritt des Verschlüsselns (23) auf dem Eingangsknoten durchgeführt wird,
> die Ausführung des Containers auf einem Rechenknoten (5, 6) des ersten Client-Rechners (3) des Netzwerks (1) durchgeführt wird,
> der Rechenknoten (5, 6) vom Eingangsknoten getrennt ist.

3. Verfahren zur sicheren Speicherung nach einem der vorhergehenden Ansprüche, **dadurch gekennzeichnet, dass** dem Schritt des Verschlüsselns (23) zunächst ein Schritt des Erstellens eines Container-Images (22) auf dem ersten Client-Rechner (3), möglicherweise auf dem Eingangsknoten, vorausgeht.

4. Verfahren zur sicheren Speicherung nach einem der vorhergehenden Ansprüche, **dadurch gekennzeichnet, dass** der Verschlüsselungsschlüssel (25) ein symmetrischer Schlüssel ist.

5. Verfahren zur sicheren Speicherung nach einem der vorhergehenden Ansprüche, **dadurch gekennzeichnet, dass** der Schritt des Verschlüsselns (23) des Container-Images (22) unmittelbar vor dem Schritt des Sendens (11) dieses Container-Images (22) durchgeführt wird, zwischen der vom Benutzer (2) des ersten Client-Rechners (3) durchgeführten Anfrage zum Senden des Container-Images (22) und dem tatsächlichen Senden (11) des verschlüsselten Container-Images (22) an den Server-Rechner (4).

6. Verfahren zur sicheren Speicherung nach einem der vorhergehenden Ansprüche, **dadurch gekennzeichnet, dass** der Schritt des Verschlüsselns (23) des Container-Images (22) in eine Befehlszeile zum Senden dieses Container-Images (22) vom ersten Client-Rechner (3) zum Server-Rechner (4) als zusätzliche Verschlüsselungsschicht integriert ist,
und vorteilhafterweise der Verschlüsselungsschlüssel (25) in Form eines Arguments dieser Sende-Befehlszeile übergeben wird.

7. Verfahren zur sicheren Speicherung nach Anspruch 6, **dadurch gekennzeichnet, dass** der Schritt des Verschlüsselns (23) automatisch vor jedem Senden eines Container-Images (22) von dem ersten Client-Rechner (3) an den Server-Rechner (4) durchgeführt wird, oder
dass der Schritt des Verschlüsselns (23) nach einer automatischen Abfrage des Benutzers (2) des ersten Client-Rechners (3) und einer anschließenden Annahme der Verschlüsselung durch den Benutzer (2) des ersten Client-Rechners (3) durchgeführt wird.

8. Verfahren zur sicheren Auslagerung eines in einem Containerregister (20) gespeicherten Container-Images (22) in einem Netzwerk (1), das Folgendes umfasst:
> einen Schritt des Downloads (12), eines Container-Images (22) auf einen zweiten Client-Rechner (3) des Netzes (1), wobei dieses Container-Image (22) einem Anfangszustand einer Umgebung eines ersten Client-Rechners entspricht, von der aus dieser Container dann ausgeführt werden kann, gespeichert in verschlüsselter Form in einem Container-Register (20) eines Server-Rechners (4) des Netzes (1), der von dem zweiten Client-Rechner (3) entfernt ist,
> einen Schritt zum Entschlüsseln dieses Container-Images (22), der im Arbeitsspeicher des zweiten Client-Rechners (3) nach dem Schritt des Downloads (12) von dem Server-Rechner (4) durchgeführt wird, so dass das Container-Image (22) noch verschlüsselt ist, wenn es von dem zweiten Client-Rechner (3) empfangen wird, **dadurch gekennzeichnet, dass**:
> der Entschlüsselungsschlüssel (25) verschlüsselt auf dem zweiten Client-Rechner (3) eingegeben wird, der Entschlüsselungsschlüssel (25) von einem Decodierungspasswort (21) begleitet wird, mit dem er entschlüsselt werden kann, der verschlüsselte Entschlüsselungsschlüssel (25) und das Decodierungspasswort (21) sich nur im RAM des zweiten Client-Rechners (3) gemeinsam befinden, um das verschlüsselte Container-Image (22) zu entschlüsseln, so dass der Verschlüsselungsschlüssel (25) dieses Container-Images (22) im RAM des zweiten Client-Rechners (3) verwendbar, im Massenspeicher des zweiten Client-Rechners (3) unzugänglich und auf dem Server-Rechner (4) unzugänglich ist.

9. Verfahren zur sicheren Auslagerung nach Anspruch 8, **dadurch gekennzeichnet, dass**:
> der Download-Schritt (12) auf einem Rechenknoten (5, 6) des zweiten Client-Rechners (3) des Netzwerks (1) durchgeführt wird,
der Entschlüsselungsschritt auf dem Rechenknoten (5, 6) durchgeführt wird,
> die Ausführung des Containers aus dem entschlüsselten Container-Image (22) auf dem Rechenknoten (5, 6) durchgeführt wird,
> der Entschlüsselungsschlüssel (25) von einem Eingangsknoten des ersten Client-Rechners (3) des Netzwerks (1) an den Rechenknoten (5, 6) gesendet wird,
> der Rechenknoten (5, 6) vom Eingangsknoten getrennt ist,
> der Entschlüsselungsschlüssel (25) nur einmal im Speicher verwendbar ist, um die Entschlüsselung des zu entschlüsselnden Container-Images (22) durchzuführen, um anschließend die Ausführung des Containers zu starten, aber auf dem Massenspeicher des Rechenknotens (5, 6) unzugänglich bleibt.

10. Verfahren zur sicheren Auslagerung nach Anspruch 8 und nach Anspruch 9, **dadurch gekennzeichnet, dass**:
➢ der Entschlüsselungsschlüssel (25) verschlüsselt in den Eingangsknoten eingegeben wird,
➢ dem Entschlüsselungsschlüssel (25) ein Entschlüsselungspasswort (21) beigefügt ist, mit dem er dekodiert werden kann,
➢ der verschlüsselte Entschlüsselungsschlüssel (25) und das Decodierungspasswort (21) getrennt vom Eingangsknoten zum Rechenknoten (5, 6) gesendet werden und sich nur im Arbeitsspeicher des Rechenknotens (5, 6) gemeinsam befinden, um das verschlüsselte Container-Image (22) zu entschlüsseln.

11. Verfahren zur sicheren Auslagerung nach einem der Ansprüche 8 bis 10, **dadurch gekennzeichnet, dass** der Entschlüsselungsschlüssel (25) ein symmetrischer Schlüssel ist.

12. Verfahren zur sicheren Auslagerung nach einem der Ansprüche 8 bis 11, **dadurch gekennzeichnet, dass** der Schritt des Entschlüsselns des Container-Images (22) als zusätzliche Entschlüsselungsschicht in eine Befehlszeile zum Download dieses Container-Images (22) vom zweiten Client-Rechner (3) zum Server-Rechner (4) integriert ist, und
vorteilhafterweise der Entschlüsselungsschlüssel (25) in Form eines Arguments dieser Download-Befehlszeile übergeben wird.

13. Verfahren zur sicheren Speicherung nach einem der Ansprüche 1 bis 7, **dadurch gekennzeichnet, dass**:
➢ das Containerregister (20) wenigstens Folgendes umfasst:
∘ eine Funktion zum Hinzufügen eines Container-Images (22) zum Register (20),
∘ eine Funktion zum Löschen eines Container-Images (22) aus dem Register (20),
∘ eine Funktion zur gemeinsamen Nutzung eines im Register (20) gespeicherten Container-Images (22) durch mehrere voneinander getrennte Client-Rechner (3) des Netzwerks (1),
∘ eine Funktion zum Download (12) eines im Register (20) gespeicherten Container-Images (22) auf einen Client-Rechner (3) des Netzwerks (1).

14. Verfahren zur sicheren Auslagerung nach einem der Ansprüche 8 bis 13, **dadurch gekennzeichnet, dass**:
➢ das Containerregister (20) wenigstens umfasst:
∘ eine Funktion zum Hinzufügen eines Container-Images (22) zum Register (20),
∘ eine Funktion zum Löschen eines Container-Images (22) aus dem Register (20),
∘ eine Funktion zur gemeinsamen Nutzung eines im Register (20) gespeicherten Container-Images (22) durch mehrere voneinander getrennte Client-Rechner (3) des Netzwerks (1),
∘ eine Funktion zum Download (12) eines im Register (20) gespeicherten Container-Images (22) auf einen Client-Rechner (3) des Netzwerks (1).

15. Knotennetzwerk, umfassend ein Containerregister (20), einen ersten Client-Rechner, einen zweiten Client-Rechner, unter Verwendung eines Verfahrens zur sicheren Speicherung nach einem der Ansprüche 1 bis 7 und 13 und eines Verfahrens zur sicheren Auslagerung nach einem der Ansprüche 8 bis 12 und 14.

## Claims

1. Method for securely storing, in a network (1), a container image (22) in a container registry (20), comprising:
- a step (11) of sending a container image (22), this container image (22) corresponding to an initial state of a client machine environment which can subsequently be used to execute this container, from a first client machine (3) of the network (1) to a container registry (20) of a server machine (4) of the network (1), which server machine (4) is remote from the first client machine (3),
- a step (23) of encrypting this container image (20), which step is carried out in the random access memory of the first client machine (3), before the step (1) of sending it to the server machine (4), such that said container image (22) is already encrypted when it is received by the container registry (20) in order to be stored therein, **characterised in that**:
- the encryption key (25) is introduced in encoded form on the first client machine (3), the encryption key (25) is accompanied by a decoding password (21) enabling it to be decoded, the encoded encryption key (25) and the decoding password (21) are only found together in the random access memory of the first client machine (3) in order to encrypt the container image (22), such that the encryption key (25) of this container image (22) can be used in the random access memory of the first client machine (3), is inaccessible in the mass storage of the first client machine (3) and is inaccessible on the server machine (4).

2. Secure storage method according to claim 1, **characterised in that**:
- the sending step (11) is carried out on an input node of the first client machine (3) of the network (1),
- the encryption step (23) is carried out on the input node,
- the container will be executed on a compute node (5, 6) of the first client machine (3) of the network (1),
- the compute node (5, 6) is distinct from the input node.

3. Secure storage method according to any one of the preceding claims, **characterised in that** the encryption step (23) is first preceded by a step of creating a container image (22) on the first client machine (3), optionally on the input node.

4. Secure storage method according to any one of the preceding claims, **characterised in that** the encryption key (25) is a symmetric key.

5. Secure storage method according to any one of the preceding claims, **characterised in that** the step (23) of encrypting the container image (22) is carried out immediately before the step (11) of sending this container image (22), between the request to send the container image (22) made by the user (2) of the first client machine (3) and the actual sending (11) of the encrypted container image (22) to the server machine (4).

6. Secure storage method according to any one of the preceding claims, **characterised in that** the step (23) of encrypting the container image (22) is integrated into a command line for sending, from the first client machine (3) to the server machine (4), this container image (22) in the form of an additional encryption layer, and advantageously **in that** the encryption key (25) is passed in the form of an argument on this sending command line.

7. Secure storage method according to claim 6, **characterised in that** the encryption step (23) is carried out automatically before any container image (22) is sent from the first client machine (3) to the server machine (4),
or **in that** the encryption step (23) is carried out after automatically querying the user (2) of the first client machine (3), followed by the user (2) of the first client machine (3) accepting the encryption.

8. Method for securely retrieving, from a network (1), a container image (22) stored in a container registry (20), comprising:
- a step (12) of downloading a container image (22) onto a second client machine (3) of the network (1), this container image (22) corresponding to an initial state of a first client machine environment which can subsequently be used to execute this container, the image being stored in encrypted form in a container registry (20) of a server machine (4) of the network (1), which server machine (4) is remote from the second client machine (3),
- a step of decrypting this container image (22), which step is carried out in the random access memory of the second client machine (3), after the step (12) of downloading it from the server machine (4), such that the container image (22) is still encrypted when it is received by the second client machine (3),
**characterised in that**:
- the decryption key (25) is introduced in encoded form on the second client machine (3), the decryption key (25) is accompanied by a decoding password (21) enabling it to be decoded, the encoded decryption key (25) and the decoding password (21) are only found together in the random access memory of the second client machine (3) in order to decrypt the encrypted container image (22), such that the decryption key (25) of this container image (22) can be used in the random access memory of the second client machine (3), is inaccessible in the mass storage of the second client machine (3) and is inaccessible on the server machine (4).

9. Secure retrieval method according to claim 8, **characterised in that**:
- the downloading step (12) is carried out on a compute node (5, 6) of the second client machine (3) of the network (1),
- the decryption step is carried out on the compute node (5, 6),
- the container is executed on the compute note (5, 6) using the decrypted container image (22),
- the decryption key (25) is sent from an input node of the first client machine (3) of the network (1) to the compute node (5, 6),
- the compute node (5, 6) is distinct from the input node,
- the decryption key (25) can be used only once in the random access memory of the compute node (5, 6) to decrypt the container image (22) to be decrypted in order to subsequently launch execution of the container, but remains inaccessible in the mass storage of the compute node (5, 6).

10. Secure retrieval method according to claim 8 and according to claim 9, **characterised in that**:
- the decryption key (25) is introduced in encoded form on the input node,
- the decryption key (25) is accompanied by a decoding password (21) enabling it to be decoded,
- the encoded decryption key (25) and the decoding password (21) are sent separately from the input node to the compute node (5, 6) and are only found together in the random access memory of the compute node (5, 6) in order to decrypt the encrypted container image (22).

11. Secure retrieval method according to any one of claims 8 to 10, **characterised in that** the decryption key (25) is a symmetric key.

12. Secure retrieval method according to any one of claims 8 to 11, **characterised in that** the step of decrypting the container image (22) is integrated into a command line for downloading, from the second client machine (3) to the server machine (4), this container image (22) in the form of an additional decryption layer,
and advantageously **in that** the decryption key (25) is passed in the form of an argument on this downloading command line.

13. Secure storage method according to any one of claims 1 to 7, **characterised in that**:
- the container registry (20) comprises at least:
-- a function for adding a container image (22) to the registry (20),
-- a function for deleting a container image (22) from the registry (20),
-- a function for sharing a container image (22) stored in the registry (20), between several distinct client machines (3) of the network (1),
-- a function (12) for downloading a container image (22) stored in the registry (20) onto a client machine (3) of the network (1).

14. Secure retrieval method according to any one of claims 8 to 13, **characterised in that**:
- the container registry (20) comprises at least:
- - a function for adding a container image (22) to the registry (20),
- - a function for deleting a container image (22) from the registry (20),
- - a function for sharing a container image (22) stored in the registry (20), between several distinct client machines (3) of the network (1),
- - a function (12) for downloading a container image (22) stored in the registry (20) onto a client machine (3) of the network (1).

15. Network of nodes, comprising a container registry (20), a first client machine, and a second client machine, and using a secure storage method according to any one of claims 1 to 7 and 13 and a secure retrieval method according to any one of claims 8 to 12 and 14.
